# EUROPÄISCHE PATENTSCHRIFT

(11) **EP 3 580 838 B1**
(45) Veröffentlichungstag und Bekanntmachung des Hinweises auf die Patenterteilung: **22.12.2021**
(21) Anmeldenummer: 18751824.6
(22) Anmeldetag: 01.02.2018
(51) Int. Cl.: H02K 11/33, H02K 11/215, H02K 9/22, H02K 9/06

(54) **UMRICHTERMOTOR**
MOTOR CONVERTER
MOTEUR À CONVERTISSEUR

(30) Priorität: 10.02.2017 DE 102017001265
(43) Veröffentlichungstag der Anmeldung: 18.12.2019
(73) Patentinhaber: SEW-EURODRIVE GmbH & Co. KG, 76646 Bruchsal (DE)
(72) Erfinder: SCHMIDT, Josef, 76676 Graben-Neudorf (DE); ZÖLLER, Thomas, 76646 Bruchsal (DE); LEICHTER, Thomas, 76187 Karlsruhe (DE); ALTAN, Firat, 76131 Karlsruhe (DE); SCHUMANN, Christian, 76774 Leimersheim (DE); HAUCK, Matthias, 68723 Schwetzingen (DE); SCHÄFER, Jens, 76676 Graben-Neudorf (DE)
(86) Internationale Anmeldenummer: PCT/EP2018/025026
(87) Internationale Veröffentlichungsnummer: WO 2018/145817

(56) Entgegenhaltungen:
- EP-A1- 1 271 749
- EP-A2- 1 940 008
- EP-A2- 3 007 330
- WO-A2-2009/012972
- DE-A1- 4 243 044
- JP-A- H11 313 465
- US-A1- 2013 076 174

## Beschreibung

Die Erfindung betrifft einen Umrichtermotor.

Es ist allgemein bekannt, dass ein Umrichtermotor einen Elektromotor und einen diesen speisenden Umrichter aufweist.

Aus der DE 10 2004 004 227 A1 ist als nächstliegender Stand der Technik ein kollektorloser Gleichstrommotor bekannt.

Aus der DE 10 2006 050 067 A1 ist ein elektromotorischer Stellantrieb bekannt.

Aus der DE 196 52 652 A1 ist ein Gebläseaggregat mit einer Drehzahlsteuerschaltung bekannt.

Aus der WO 2009/012972 A2 ist als nächstliegender Stand der Technik ein Umrichtermotor mit Lüfterhaube bekannt.

Aus der JP H11 313465 A ist ein Motor mit Steuervorrichtung bekannt.

Aus der DE 42 43 044 A1 ist eine Wechselrichter-Motorkombination bekannt.

Aus der US 2013/0076174 A1 ist eine elektrische Antriebsanordnung bekannt.

Aus der EP 1 271 749 A1 ist ein Elektromotor bekannt, wobei ein Federelement einen Anpressdruck auf ein Adapterelement und somit an einen Gehäusemantel erhöht. .

Aus der EP 3 007 330 A2 ist ein elektronisch kommutierter Gleichstrommotor bekannt.

Aus der EP 1 940 008 A2 ist eine Baureihe von Elektromotoren bekannt.

Der Erfindung liegt daher die Aufgabe zugrunde, einen Umrichtermotor weiterzubilden, der einfach herstellbar und umweltfreundlich sein soll, insbesondere geeignet sein soll für ein Recycling.

Erfindungsgemäß wird die Aufgabe bei dem Umrichtermotor nach den in Anspruch 1 angegebenen Merkmalen gelöst und weitere vorteilhafte Ausgestaltungen der Erfindung sind nach den in den Nebenansprüchen angegebenen Merkmalen definiert. Die unten beschriebenen Ausgestaltungen gehören zur Erfindung sofern nicht ausdrücklich anders angegeben.

Wichtige Merkmale der Erfindung bei dem Umrichtermotor sind, dass er einen Elektromotor mit Gehäuseteil und Lüfter, eine Lüfterhaube und einen Umrichter umfasst,
wobei der Umrichter ein Gehäuseteil, eine Leiterplatte und ein mit der Leiterplatte elektrisch verbundenes, insbesondere lötverbundenes, Leistungsmodul aufweist,
wobei die Lüfterhaube mit einem Gehäuseteil des Elektromotors verbunden ist, insbesondere schraubverbunden ist,
wobei ein an der Innenseite des Deckelteils abgestütztes Federelement eine Platte, insbesondere Kupferplatte, des Leistungsmoduls an die Lüfterhaube drückt.

Von Vorteil ist dabei, dass die Wärmeabfuhr des Leistungsmoduls über dessen Kupferplatte an die Lüfterhaube erfolgt, welche vom vom Lüfter geförderten Luftstrom gekühlt ist. Somit ist ein derart großer Temperaturgradient für die Abfuhr der Wärme bereitstellbar, dass sogar ein hoher Wärmeübergangswiderstand zwischen Kupferplatte und Lüfterhaube erlaubt ist, also auf Wärmeleitpaste und Bearbeitung der Lüfterhaube im Berührbereich verzichtet werden kann.

Bei einer vorteilhaften Ausgestaltung ist der Lüfter drehfest mit einer Rotorwelle des Elektromotors verbunden. Von Vorteil ist dabei, dass ein Luftstrom bei Betrieb des Motors passiv erzeugbar ist, also der Lüfter keinen separaten Antrieb benötigt.

Bei einer vorteilhaften Ausgestaltung ist die Lüfterhaube ein metallisches Gussteil, insbesondere ein Aluminium-Gussteil,

wobei die Lüfterhaube und/oder der von der Platte berührte Bereich der Lüfterhaube unbearbeitet ist. Von Vorteil ist dabei, dass die Herstellung kostengünstig ist und trotzdem die Wärme effektiv abführbar ist.

Bei einer vorteilhaften Ausgestaltung drückt das Federelement auf ein Rahmenteil, welches mittels eines durch eine Ausnehmung der Leiterplatte hindurchragenden Kunststoffbolzen auf das Leistungsmodul drückt. Von Vorteil ist dabei, dass die Wärme gut abführbar ist, da somit die Kupferplatte an die Lüfterhaube angedrückt wird.

Erfindungsgemäß drückt das Federelement auf ein Rahmenteil, welches wiederum auf durch Ausnehmungen der Leiterplatte hindurchragende Kunststoffbolzen des Leistungsmoduls drückt, die nach einem nicht zur Erfindung gehörenden Beispiel Teil eines zweiten Rahmenteils sind. Das zweite Rahmenteil ist mit der Kupferplatte, auf der sich die Leistungshalbleiter befinden, verbunden und drückt diese somit auf die Lüfterhaube. Von Vorteil ist dabei, dass die Wärme gut abführbar ist.

Bei einer vorteilhaften Ausgestaltung weist die Leiterplatte einen Sensor auf, welcher einen mit dem Lüfter drehfest verbundenen Zahnring detektiert, insbesondere die Verzahnung des Zahnrings detektiert. Von Vorteil ist dabei, dass die Drehzahl der Rotorwelle von einer auf der Leiterplatte angeordneten Signalelektronik detektierbar ist.

Bei einer vorteilhaften Ausgestaltung ist der Lüfter als Kunststoffspritzgussteil ausgeführt und der Zahnring ist im Lüfter umspritzt angeordnet. Von Vorteil ist dabei, dass eine kostengünstige Herstellung ermöglicht ist.

Bei einer vorteilhaften Ausgestaltung ist ein Flussführungsteil zum Führen von magnetischem Fluss mit der Lüfterhaube verbunden, so dass zwischen Lüfter und Flussführungsteil sowie zwischen Sensor und Flussführungsteil jeweils nur ein derart schmaler Luftspalt angeordnet ist, dass der Zahnring als magnetischer Rückschluss fungiert. Von Vorteil ist dabei, dass der Sensor entfernt von dem Zahnring anordenbar ist und die Detektion trotzdem effektiv erfolgt, da ein von einem Dauermagneten erzeugter magnetischer Fluss mittels des Flussführungsteils zum Zahnring hin und von diesem als magnetischen Rückschlussteil durchgeleiteten Fluss über ein Flussführungsteil zum Dauermagneten zurückleitbar ist. Das Flussführungsteil kann auch zweigeteilt ausgeführt sein, insbesondere beim Übergang von der Lüfterhaube in den Deckelbereich, wobei sogar ein schmaler Luftspalt tolerierbar ist.

Bei einer vorteilhaften Ausgestaltung weist der Lüfter Lüfterflügel auf,
wobei der von dem Zahnring überdeckte axiale Bereich beabstandet ist von dem von den Lüfterflügeln überdeckten axialen Bereich. Von Vorteil ist dabei, dass die Förderung des Luftstroms unabhängig von der Detektion der Winkellage der Rotorwelle ausführbar ist. Insbesondere wird die Detektion von der Umspritzung des Zahnrings nicht behindert.

Bei einer vorteilhaften Ausgestaltung weist die Leiterplatte eine Ausnehmung auf, durch welche ein Gewindeteil hindurchragt, welches mit dem Deckelteil verbunden ist, insbesondere in eine Gewindebohrung des Deckelteils eingeschraubt ist,

insbesondere wobei eine Kontermutter das Gewindeteil an dem Deckelteil, insbesondere an der Gewindebohrung des Deckelteils, sichert und als Beabstandungsmittel zwischen Deckelteil und Leiterplatte fungiert. Von Vorteil ist dabei, dass vor Aufsetzen des Deckelteils auf das Gehäuseteil die Leiterplatte derart von dem Federelement verkippt wird, dass die Normale der Leiterplattenebene der Leiterplatte nicht parallel zur Achse des Gewindes des Gewindeteils ausgerichtet ist. Erst nach Aufsetzen des Deckelteils auf das Gehäuseteil und somit Zurückkippen der Leiterplatte ist die Normale parallel zur Achse des Gewindes des Gewindeteils ausgerichtet. Somit wird die Leiterplatte nicht verspannt.

Vorzugsweise werden genau drei Ausnehmungen und drei Gewindestifte verwendet, also jeweils eine Ausnehmung und ein Gewindestift für je eine der drei Netzphasen.

Bei einer vorteilhaften Ausgestaltung strömt der vom Lüfter geförderte Luftstrom durch ein an der Lüfterhaube ausgeformtes Gitter. Von Vorteil ist dabei, dass die Lüfterhaube effektiv entwärmt wird und die Berührung des Lüfters von der Umgebung her verhindert ist. Somit ist also die Sicherheit erhöht und die Entwärmung effektiv.

In einer weiteren vorteilhaften Ausgestaltung schließt das Leistungsmodul räumlich direkt oberhalb des Lüftungsgitters an, um die Entfernung zum Lüftergitter zu minimieren. Lediglich bei vorhandenen Flussführungsteilen sind insbesondere nur diese noch zwischen Leistungsmodul und Lüftergitter angeordnet.

Bei einer vorteilhaften Ausgestaltung weist das Deckelteil eine Ausnehmung auf, welche durch einen mit dem Deckelteil verbundenen Anschlusskastendeckel verschließbar ist,

insbesondere wobei bei entferntem Anschlusskastendeckel ein Kabelschuh auf das Gewindeteil auffädelbar ist und mit einer Mutter befestigbar ist, insbesondere an die Leiterplatte andrückbar ist,
insbesondere wobei der Anschlusskastendeckel eine durch die Wandung des Anschlusskastendeckels durchgehende Kabelverschraubung aufweist, insbesondere zur Durchführung einer mit dem Kabelschuh elektrisch verbundenen elektrischen Leitung. Von Vorteil ist dabei, dass die elektrischen Leitungen, insbesondere Versorgungsleitungen, bei entferntem Anschlusskastendeckel mit dem Gewindeteil und weiteren Teilen verbindbar sind und danach der Anschlusskastendeckel als Verschluss der Ausnehmung auf das Deckelteil aufsetzbar ist.

Bei einer vorteilhaften Ausgestaltung sind auf der Leiterplatte Bauelemente bestückt, insbesondere Bauelemente einer Signalelektronik des Umrichters,

insbesondere wobei die Signalelektronik pulsweitenmodulierte Ansteuersignale zur Ansteuerung der vom Leistungsmodul umfassten Halbleiterschalter erzeugt. Von Vorteil ist dabei, dass der Umrichter mit dem Motor in einem Gesamtgehäuse integrierbar ist. Somit ist ein kompakter Antrieb bereitstellbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

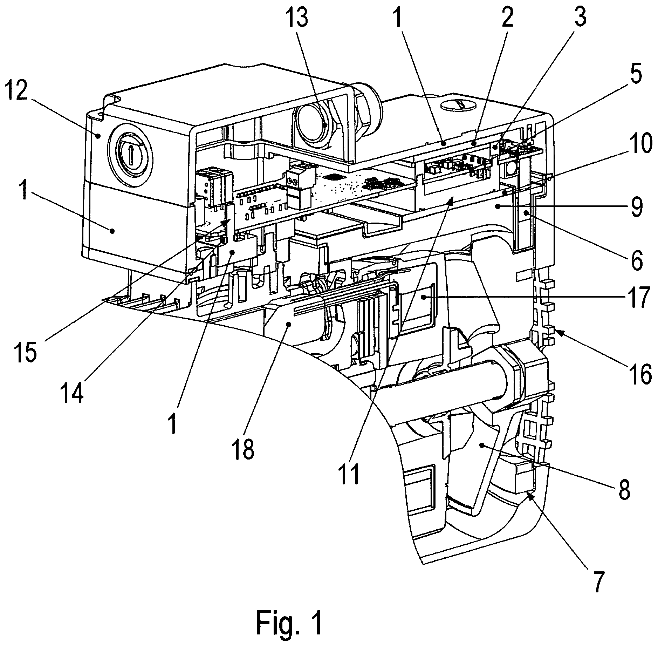

In der Figur 1 ist eine Schrägansicht eines erfindungsgemäßen angeschnittenen Umrichtermotors dargestellt.
In der Figur 2 ist ein Querschnitt hierzu dargestellt.

Wie in den Figuren gezeigt, weist der Umrichtermotor einen Elektromotor auf, dessen Stator 18 gespeist wird von einem Umrichter des Umrichtermotors.

An einem axialen Endbereich des Motors ist eine elektromagnetisch betätigbare Bremse 17 angeordnet, welche die Drehbewegung des relativ zum Stator drehbar gelagerten Rotors des Motors abbremsbar macht.

Mit dem Rotor ist ein Lüfter 8 drehfest verbunden, dessen Lüfterflügel einen Luftstrom fördern.

Mit einem den Stator 18 umgebenden Gehäuseteil des Motors ist eine Lüfterhaube 9 lösbar verbunden, welche ein Lüfterhaubengitter 16 aufweist, das vom geförderten Luftstrom durchströmt wird.

Der Luftstrom strömt auch an Bereichen der Innenseite der Lüfterhaube 9 entlang.

Der Lüfter 8 weist axial beabstandet von dem von den Lüfterflügeln des Lüfters 8 überdeckten axialen Bereich einen einen Zahnring umfassenden Bereich des Lüfters 8 auf, wobei der Zahnring im Lüfter 8 umspritzt angeordnet ist. Vorzugsweise ist der Lüfter 8 aus einem elektrisch und/oder magnetisch nicht leitfähigen Stoff, insbesondere aus Kunststoff, gefertigt. Beim Herstellen des Lüfters 8 als Kunststoffspritzgussteil wird der Zahnring in die Form eingelegt und danach mit Kunststoff umspritzt.

Auf einer Leiterplatte 5 ist ein Sensor angeordnet, welcher die Zähne des Zahnrings mittels durch ein Flussführungsteil 6 geführten magnetischen Flusses detektiert. Das Flussführungsteil 6 ist an einem seiner Endbereiche zum Sensor hingerichtet und an einem anderen seiner Endbereiche zur Verzahnung des Zahnrings hingerichtet. Nur ein schmaler Luftspalt trennt das Flussführungsteil 6 und den Lüfter 8, insbesondere den Bereich 7 des Lüfters 8. Das

Flussführungsteil ist alternativ auch zweigeteilt ausführbar, insbesondere beim Übergang von der Lüfterhaube in den Deckelbereich, wobei ein schmaler Luftspalt tolerierbar wäre.

Mittels des vom Sensor bei Drehbewegung des Lüfters 8 und somit des Zahnrings ist eine Detektion der Winkelstellung und/oder Drehgeschwindigkeit der Rotorwelle des Motors ermöglicht, da der magnetische Luftspalt durch die Drehung des Zahnrads verändert wird. Der vom Lüfter 8 überdeckte axiale Bereich überlappt mit dem vom Flussführungsteil 6 überdeckten axialen Bereich.

Ein Deckelteil 1 ist auf das Gehäuseteil des Motors aufgesetzt und überdeckt zumindest teilweise die Lüfterhaube 9. Zumindest in einem Teilbereich ist die Lüfterhaube 9 zwischen dem Deckelteil 1 und dem Gehäuseteil angeordnet.

Die Leiterplatte 5 weist eine Ausnehmung auf, durch welche ein Gewindeteil 15, insbesondere Gewindebolzen, hindurchragt. Das Gewindeteil 15 ist in eine Gewindebohrung eingeschraubt, welche in das Deckelteil 1 eingebracht ist, insbesondere welche in eine nach innen hervorragende Auskragung des Deckelteils 1 eingebracht ist.

Eine Mutter 14 ist auf das Gewindeteil 15 aufgeschraubt als Beabstandungsmittel zur Herstellung einer Beabstandung zwischen der Leiterplatte 5 und dem Gehäuseteil.

Auf der von der Mutter 14 abgewandten Seite der Leiterplatte 5 ist ein Kabelschuh auf das Gewindeteil aufschiebbar und mittels einer weiteren Mutter gegen die Leiterplatte 5 andrückbar und befestigbar.

Das Deckelteil 1 weist eine Ausnehmung auf, die mittels eines Anschlusskastendeckels 12 verschließbar ist, indem dieser mit dem Deckelteil 1 verbindbar ist.

Die Zuführung der Anschlusskabel zum Kabelschuh erfolgt durch eine Kabelverschraubung, welche durch die Wandung des Anschlusskastendeckels 12 hindurchragt.

An der Innenseite des Deckelteils 1 abgestützte Federelemente 2 drücken auf ein Rahmenteil 3, welches ein Leistungsmodul 11 mit seiner Platte 10, insbesondere Kupferplatte, gegen die Lüfterhaube 9 drückt

Die Lüfterhaube 9 ist als Gussteil gefertigt, insbesondere als Aluminiumgussteil.

Das Leistungsmodul 11 ist mit der Leiterplatte 5 elektrisch und mechanisch verbunden und umfasst steuerbare Halbleiterschalter 21. Die Halbleiterschalter 21 sind von einem Wechselrichter umfasst, dessen wechselspannungsseitiger Anschluss den Elektromotor, insbesondere dessen Stator, speist. Die Halbleiterschalter 21 sind in Halbbrücken angeordnet, wobei die Halbbrücken aus dem gleichspannungsseitigen Anschluss des Wechselrichters versorgt sind. Im Umrichter ist neben dem Wechselrichter auch ein Gleichrichter umfasst, der den gleichspannungsseitigen Anschluss des Wechselrichters versorgt. Der Gleichrichter ist über die Kabel aus dem Wechselspannungsnetz versorgbar.

Das Rahmenteil 3 ist zwischen Deckelteil 1 und Leiterplatte 5 angeordnet. Das Leistungsmodul 11 ist mit Kontaktelementen mit der Leiterplatte 5 verbunden, insbesondere lötverbunden oder durch Einpress- oder Federkontakte.

Die Platte 10, insbesondere Kupferplatte, ist auf der von der Leiterplatte 5 abgewandten Seite des Leistungsmoduls 11 angeordnet und berührt die metallisch ausgeführte Lüfterhaube 9. Die Lüfterhaube 9 ist als Gussteil ausgeführt und nicht bearbeitet, insbesondere nicht im Berührbereich mit der Platte 10. Es ist keine Wärmeleitpaste zwischen Lüfterhaube 9 und Platte 10 angeordnet. Somit liegt zwar die Platte 10 flächig an der Lüfterhaube 9 an, jedoch ist im Mikrobereich die Berührung nicht ununterbrochen. Da aber die Lüfterhaube von dem vom Lüfter geförderten Luftstrom gekühlt wird, ist ein für den Wärmestrom genügend hoher Temperaturgradient vorhanden. Das Leistungsmodul 11 wird also über die Lüfterhaube 9 entwärmt.

Da die Lüfterhaube das kühlste Bauteil des Umrichtermotors ist, bewirkt eine fehlende Wärmeleitpaste und die Verwendung des Rohgussteils einen schlechteren Wärmeübergang und somit stellt sich eine höhere Temperaturdifferenz ein. Die erhöhte Temperaturdifferenz treibt dann aber einen größeren Wärmestrom. Somit wird aufgrund der niedrigen Lüfterhaubentemperatur trotzdem keine kritische Temperatur des Leistungsmoduls überschritten. Um Wärmekapazität und Wärmeleitung von der Kupferplatte auf die Lüfterhaube trotz Verzicht auf Wärmeleitpaste und Bearbeitung zu optimieren, ist die Kupferplatte dick ausgeführt. Außerdem ist die Kontaktfläche zwischen Lüfterhaube und Kupferplatte größer als die Kontaktfläche zwischen Kupferplatte und Halbleiteranordnung. Die Kupferplatte spreizt also den von der Halbleiteranordnung erzeugten Wärmestrom auf. Die größere Übergangsfläche zwischen Kupferplatte und Lüfterhaube vermindert den Wärmeübergangswiderstand zwischen Kupferplatte und Lüfterhaube.

Wichtig ist dabei die von den zwischen dem Deckelteil 1 und dem auf das Leistungsmodul 11 drückenden Rahmenteil 3 angeordneten Federelementen 2 erzeugte Anpresskraft.

Die durch Vorspannung der Federelemente 2 erzeugte Anpresskraft wird beim Aufsetzen des Deckelteils 1 auf das Gehäuseteil erzeugt. Denn die Lüfterhaube 9 ist schon vor Aufsetzen des Deckelteils 1 mit dem Gehäuseteil verbunden. Beim Aufsetzen des Deckelteils 1 wird die mit dem Deckelteil 1 verbundene Leiterplatte 5 samt dem mit ihr verbundenen Leistungsmodul 11 in Richtung zur Lüfterhaube 9 hinbewegt und somit die am Leistungsmodul 11 vorgesehene Platte 10 an die Lüfterhaube 9 angedrückt, weil die Federelemente 2 gespannt werden.

Der Gewindebolzen 15 ist mittels der Mutter 14 elektrisch verbunden mit der Leiterplatte 5. Hierzu berührt die Mutter 14 einen Bereich einer Leiterbahn der Leiterplatte 5.

Das Rahmenteil 3 drückt auf, vorzugsweise elektrisch isolierende, Kunststoffbolzen des Leistungsmoduls 11.

Die Platte 10 ist wärmeleitend mit den Halbleiterschaltern 21 des Wechselrichters verbunden.

Das an der Lüfterhaube 9 ausgeformte Lüfterhaubengitter 16 ist auf der vom Stator 18 axial abgewandten Seite des Lüfters 8.

Bei der Herstellung bildet also das Deckelteil zusammen mit der Leiterplatte 5 und dem daran angeordneten Leistungsmodul 11 eine bauliche Einheit, die vorkomplettiert ist. Auch wenn vor dem Aufsetzen des Deckelteils 1 auf das Gehäuseteil des Elektromotors die Federelemente 2 die Leiterplatte 5 vom Deckelteil 1 wegdrücken und somit die mittels der am Gewindeteil 15 aufgeschraubten Mutter 14 begrenzte Leiterplatte 5 leicht verkippt gehalten ist, ist die so gebildete Einheit leicht transportierbar und lagerbar. Beim Aufsetzen des Deckelteils 1 auf das Gehäuseteil wird das Leistungsmodul 11 mit seiner Platte 10 an die Lüfterhaube angedrückt und somit die Leiterplatte 5 vom Leistungsmodul 11 aus der verkippten Lage zurückgedrückt. Nachfolgend werden dann bei geöffnetem Anschlusskastendeckel 12 die durch die Kabelverschraubung 13 in den Innenraum führenden elektrischen Leitungen elektrisch verbunden mit dem Gewindeteil 15. Hierzu wird ein mit einer der elektrischen Leitungen verbundener Kabelschuh mittels seines ösenartigen Abschnitts auf das Gewindeteil 15 aufgesetzt und mittels einer weiteren Mutter gegen die Leiterplatte 5 beziehungsweise gegen eine oberhalb der Leiterplatte auf das Gewindeteil aufgeschraubte Mutter gedrückt. Da die Leiterplatte 5 durch das Aufsetzen nicht mehr verkippt ist, ist nun die Achse des Gewindeteils 15, insbesondere Gewindebolzen, parallel zur Normalen der Leiterplattenebene der Leiterplatte 5.

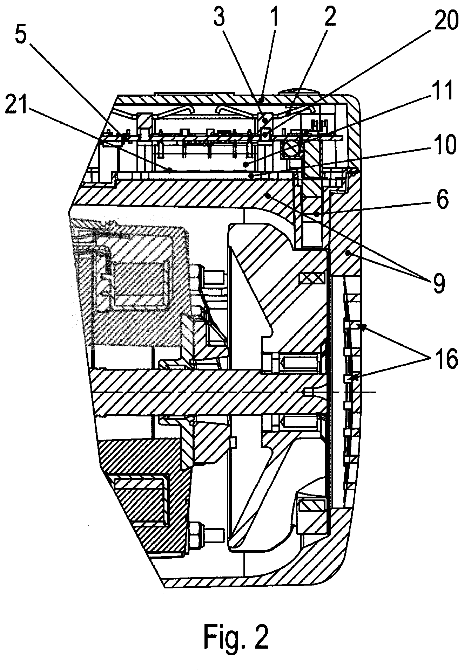

Wie in Figur 2 deutlich gezeigt, drückt das von den Federelementen 2 beaufschlagte Rahmenteil 3 auf durch Ausnehmungen der Leiterplatte 5 hindurchragenden Kunststoffbolzen 22 des Leistungsmodule 11, welches mittels Kontaktstiften an der Leiterplatte befestigt ist.

In einem weiteren erfindungsgemäßen Ausführungsbeispiel wird mit jeweils einer Mutter oberhalb der Leiterplatte auf jedem der mindestens einen Gewindebolzen die Leiterplatte mit den Gewindebolzen und damit mit dem Deckelteil verbunden. Erst zu einem späteren Zeitpunkt wird zur Inbetriebnahme jeweils ein Kabelschuh mittels einer Mutter auf die oberhalb der Platine liegenden Mutter aufgeschraubt und damit eine mechanische und elektrische Verbindung zwischen Kabelschuh und Platine hergestellt.

In einem weiteren erfindungsgemäßen Ausführungsbeispiel ragt die Kabelverschraubung auch durch das Deckelteil, so dass der Anschlussraum nur durch einen flachen Deckel verschlossen werden muss.

In einem weiteren erfindungsgemäßen Ausführungsbeispiel ist das mindestens eine Gewindeteil 15 als Teil eines Kunststoffblocks ausgeführt, welcher in das Deckelteil 1 eingebracht ist, insbesondere welcher auf einen nur abschnittsweise realisierten Boden des Deckelteils 1 eingebracht ist. Eine Mutter 14 ist auf das Gewindeteil 15 aufgeschraubt als Beabstandungsmittel zur Herstellung einer Beabstandung zwischen der Leiterplatte 5 und dem Kunststoffblock.

### Bezugszeichenliste

- 1: Deckelteil
- 2: Federelement
- 3: Rahmenteil
- 5: Leiterplatte
- 6: Flussführungsteil
- 7: Zahnring enthaltender Bereich des Lüfters
- 8: Lüfter
- 9: Lüfterhaube mit Lüfterhaubengitter 16
- 10: Platte, insbesondere Kupferplatte
- 11: Leistungsmodul, umfassend Leistungshalbleiter 21
- 12: Anschlusskastendeckel
- 13: Kabelverschraubung
- 14: Mutter
- 15: Gewindeteil, insbesondere Gewindebolzen
- 16: Lüfterhaubengitter
- 17: elektromagnetisch betätigbare Bremse
- 18: Stator
- 20: Kunststoffbolzen
- 21: Leistungshalbleiter

## Patentansprüche

1. Umrichtermotor, umfassend einen Elektromotor mit Gehäuseteil und Lüfter (8), eine Lüfterhaube (9), ein Deckelteil (1) und einen Umrichter,
wobei das Deckelteil (1) auf das Gehäuseteil des Motors aufgesetzt ist und zumindest teilweise die Lüfterhaube (9) überdeckt,
wobei der Umrichter eine Leiterplatte (5) und ein mit der Leiterplatte (5) elektrisch verbundenes,insbesondere lötverbundenes, Leistungsmodul (11) aufweist,
wobei das Leistungsmodul (11) eine Platte (10), insbesondere Kupferplatte, aufweist,
wobei die Platte (10) zur Wärmeableitung vom Leistungsmodul (11) geeignet ausgeführt ist,
wobei die Lüfterhaube (9) mit einem Gehäuseteil des Elektromotors verbunden ist, insbesondere schraubverbunden ist,
**dadurch gekennzeichnet, dass**
an der Innenseite des Deckelteils (1 Federelement (2) die Platte (10) des Leistungsmoduls (11) an die Lüfterhaube (9) drückt,
wobei das Federelement (2) auf ein Rahmenteil (3) drückt, welches auf mindestens einen durch mindestens eine Ausnehmung der Leiterplatte (5) hindurchragenden Kunststoffbolzen (20) des Leistungsmoduls (11) **drückt, der die Kupferplatte** auf die Lüfterhaube (9) drückt.

2. Umrichtermotor nach Anspruch 1,
**dadurch gekennzeichnet, dass**
der Lüfter (8) drehfest mit einer Rotorwelle des Elektromotors verbunden ist.

3. Umrichtermotor nach mindestens einem der vorangegangenen Ansprüche,
**dadurch gekennzeichnet, dass**
die Lüfterhaube (9) ein metallisches Gussteil ist, insbesondere ein Aluminium-Gussteil, wobei die Lüfterhaube (9) und/oder der von der Platte (10) berührte Bereich der Lüfterhaube (9) unbearbeitet ist.

4. Umrichtermotor nach mindestens einem der vorangegangenen Ansprüche,
**dadurch gekennzeichnet, dass**
die Lüfterhaube (9) ein metallisches Gussteil ist, insbesondere ein Aluminium-Gussteil, wobei keine Wärmeleitpaste eingebracht ist, insbesondere wobei keine Wärmeleitpaste zwischen Leistungsmodul (11) und Lüfterhaube (9) vorhanden ist.

5. Umrichtermotor nach mindestens einem der vorangegangenen Ansprüche,
**dadurch gekennzeichnet, dass**
das Federelement (2) auf ein Rahmenteil (3) drückt, welches mittels eines durch eine Ausnehmung der Leiterplatte (5) hindurchragenden Kunststoffbolzen (20) auf das Leistungsmodul (11) drückt.

6. Umrichtermotor nach mindestens einem der vorangegangenen Ansprüche, **dadurch gekennzeichnet, dass**
die Leiterplatte (5) einen Sensor aufweist, welcher einen mit dem Lüfter (8) drehfest verbundenen Zahnring (7) detektiert, insbesondere die Verzahnung des Zahnrings (7) detektiert.

7. Umrichtermotor nach mindestens einem der vorangegangenen Ansprüche,
**dadurch gekennzeichnet, dass**
der Lüfter (8) als Kunststoffspritzgussteil ausgeführt ist und der Zahnring (7) im Lüfter (8) umspritzt angeordnet ist.

8. Umrichtermotor nach mindestens einem der vorangegangenen Ansprüche,
**dadurch gekennzeichnet, dass**
ein Flussführungsteil (6) zum Führen von magnetischem Fluss mit der Lüfterhaube (9) verbunden ist, so dass zwischen Lüfter (8) und Flussführungsteil (6) sowie zwischen Sensor und Flussführungsteil (6) jeweils nur ein derart schmaler Luftspalt angeordnet ist, dass der Zahnring (7) als magnetischer Rückschluss fungiert.

9. Umrichtermotor nach mindestens einem der vorangegangenen Ansprüche,
**dadurch gekennzeichnet, dass**
der Lüfter (8) Lüfterflügel aufweist,
wobei der von dem Zahnring (7) überdeckte axiale Bereich beabstandet ist von dem von den Lüfterflügeln überdeckten axialen Bereich.

10. Umrichtermotor nach mindestens einem der vorangegangenen Ansprüche,
**dadurch gekennzeichnet, dass**
die Leiterplatte (5) eine Ausnehmung aufweist, durch welche ein Gewindeteil (15) hindurchragt, welches mit dem Deckelteil (1) verbunden ist, insbesondere in eine Gewindebohrung des Deckelteils (1) eingeschraubt ist,
insbesondere wobei eine Kontermutter das Gewindeteil (15) an dem Deckelteil (1), insbesondere an der Gewindebohrung des Deckelteils (1), sichert und als Beabstandungsmittel zwischen Deckelteil (1) und Leiterplatte (5) fungiert.

11. Umrichtermotor nach einem der Ansprüche 1 bis 10,
**dadurch gekennzeichnet, dass**
die Leiterplatte (5) mindestens eine Ausnehmung aufweist, durch welche mindestens ein Gewindeteil (15) hindurchragt, welches mit dem Deckelteil (1) verbunden ist, insbesondere über einen Kunststoffblock, der an das Deckelteil (1) angeschraubt ist,
insbesondere wobei eine Mutter (14) als Beabstandungsmittel zwischen Deckelteil (1) und Leiterplatte (5) fungiert.

12. Umrichtermotor nach mindestens einem der vorangegangenen Ansprüche,
**dadurch gekennzeichnet, dass**
der vom Lüfter (8) geförderte Luftstrom durch ein an der Lüfterhaube (9) ausgeformtes Gitter strömt.

13. Umrichtermotor nach mindestens einem der vorangegangenen Ansprüche,
**dadurch gekennzeichnet, dass**
das Deckelteil (1) eine Ausnehmung aufweist, welche durch einen mit dem Deckelteil (1) verbundenen Anschlusskastendeckel (12) verschließbar ist,
insbesondere wobei bei entferntem Anschlusskastendeckel (12) ein Kabelschuh auf jedes Gewindeteil (15) auffädelbar ist und mit einer Mutter (14) befestigbar ist, insbesondere an die Leiterplatte (5) andrückbar ist,
insbesondere wobei der Anschlusskastendeckel (12) eine durch die Wandung des Anschlusskastendeckels (12) durchgehende Kabelverschraubung (13) aufweist, insbesondere zur Durchführung einer mit dem Kabelschuh elektrisch verbundenen elektrischen Leitung.

14. Umrichtermotor nach mindestens einem der vorangegangenen Ansprüche,
**dadurch gekennzeichnet, dass**
auf der Leiterplatte (5) Bauelemente bestückt sind, insbesondere Bauelemente einer Signalelektronik des Umrichters,
insbesondere wobei die Signalelektronik pulsweitenmodulierte Ansteuersignale zur Ansteuerung der vom Leistungsmodul (11) umfassten Halbleiterschalter erzeugt.

## Claims

1. A converter motor, comprising an electric motor with a housing part and fan (8), a fan cowl (9), a cover part (1) and a converter,
wherein the cover part (1) is placed on the housing part of the motor and at least partially covers the fan cowl (9),
wherein the converter has a printed circuit board (5) and a power module (11) electrically connected, in particular connected by soldering, to the printed circuit board (5),
wherein the power module (11) has a plate (10), in particular copper plate,
wherein the plate (10) is embodied to be suitable for dissipating heat from the power module (11),
wherein the fan cowl (9) is connected, in particular screw-connected, to a housing part of the electric motor,
**characterised in that**
a spring element (2) supported on the inside of the cover part (1) presses the plate (10) of the power module (11) against the fan cowl (9),
wherein the spring element (2) presses on a frame part (3) which presses on at least one plastics bolt (20) of the power module (11) protruding through at least one cutout in the printed circuit board (5), which bolt in turn presses the copper plate onto the fan cowl (9).

2. A converter motor according to claim 1,
**characterised in that**
the fan (8) is connected non-rotatably to a rotor shaft of the electric motor.

3. A converter motor according to at least one of the preceding claims,
**characterised in that**
the fan cowl (9) is a metallic cast part, in particular a cast aluminium part, the fan cowl (9) and/or the region of the fan cowl (9) contacted by the plate (10) being unmachined.

4. A converter motor according to at least one of the preceding claims,
**characterised in that**
the fan cowl (9) is a metallic cast part, in particular a cast aluminium part, with no heat transfer compound being introduced, in particular with no heat transfer compound being present between the power module (11) and fan cowl (9).

5. A converter motor according to at least one of the preceding claims,
**characterised in that**
the spring element (2) presses on a frame part (3) which presses on the power module (11) by means of a plastics bolt (20) protruding through a cutout in the printed circuit board (5).

6. A converter motor according to at least one of the preceding claims,
**characterised in that**
the printed circuit board (5) has a sensor which detects a toothed ring (7) non-rotatably connected to the fan (8), in particular detects the toothing of the toothed ring (7).

7. A converter motor according to at least one of the preceding claims,
**characterised in that**
the fan (8) is embodied as an injection-moulded plastics material part and the toothed ring (7) is arranged encapsulated in the fan (8).

8. A converter motor according to at least one of the preceding claims,
**characterised in that**
a flux guidance part (6) for guiding magnetic flux is connected to the fan cowl (9), so that there is arranged in each case between the fan (8) and the flux guidance part (6) and also between the sensor and flux guidance part (6) only such a narrow air gap that the toothed ring (7) acts as a magnetic yoke.

9. A converter motor according to at least one of the preceding claims,
**characterised in that**
the fan (8) has fan blades,
the axial region covered by the toothed ring (7) being spaced apart from the axial region covered by the fan blades.

10. A converter motor according to at least one of the preceding claims,
**characterised in that**
the printed circuit board (5) has a cutout through which protrudes a threaded part (15) which is connected to the cover part (1), in particular is screwed into a threaded bore of the cover part (1),
in particular wherein a lock nut secures the threaded part (15) on the cover part (1), in particular on the threaded bore of the cover part (1), and acts as a spacing means between the cover part (1) and printed circuit board (5).

11. A converter motor according to one of claims 1 to 10,
**characterised in that**
the printed circuit board (5) has at least one cutout through which protrudes at least one threaded part (15) which is connected to the cover part (1), in particular by way of a plastics-material block which is screwed onto the cover part (1),
in particular with a nut (14) acting as a spacing means between the cover part (1) and printed circuit board (5).

12. A converter motor according to at least one of the preceding claims,
**characterised in that**
the air stream conveyed by the fan (8) flows through a grid formed on the fan cowl (9).

13. A converter motor according to at least one of the preceding claims,
**characterised in that**
the cover part (1) has a cutout which can be closed by a terminal box cover (12) connected to the cover part (1),
in particular wherein when the terminal box cover (12) is removed a cable terminal can be threaded onto each threaded part (15) and can be fastened with a nut (14), in particular can be pressed onto the printed circuit board (5),
in particular wherein the terminal box cover (12) has a cable gland (13) which passes through the wall of the terminal box cover (12), in particular for passing through an electric line electrically connected to the cable terminal.

14. A converter motor according to at least one of the preceding claims,
**characterised in that**
components are inserted on the printed circuit board (5), in particular components of signal electronics of the converter,
in particular with the signal electronics generating pulse-width modulated control signals for controlling the semiconductor switches encompassed by the power module (11).

## Revendications

1. Moteur à convertisseur, comprenant un moteur électrique présentant une partie carter et un ventilateur (8), un capot de ventilateur (9), une partie couvercle (1) et un convertisseur,
la partie couvercle (1) étant placée sur la partie carter du moteur et recouvrant au moins partiellement le capot de ventilateur (9),
le convertisseur comprenant une carte de circuit imprimé (5) et un module de puissance (11) relié électriquement à la carte de circuit imprimé (5), notamment relié par brasage,
le module de puissance (11) comprenant une plaque (10), notamment une plaque en cuivre,
la plaque (10) étant réalisée de manière appropriée pour la dissipation de chaleur à partir du module de puissance (11),
le capot de ventilateur (9) étant relié à une partie carter du moteur électrique, notamment relié par vis,
**caractérisé en ce que**
un élément élastique (2) en appui sur le côté intérieur de la partie couvercle (1) presse la plaque (10) du module de puissance (11) contre le capot de ventilateur (9),
l'élément élastique (2) pressant sur une partie cadre (3), qui presse sur au moins un boulon en matière plastique (20) du module de puissance (11) passant à travers au moins un évidement de la carte de circuit imprimé (5), qui presse la plaque en cuivre sur le capot de ventilateur (9).

2. Moteur à convertisseur selon la revendication 1, **caractérisé en ce que**
le ventilateur (8) est relié de manière immobile en rotation avec un arbre de rotor du moteur électrique.

3. Moteur à convertisseur selon au moins l'une quelconque des revendications précédentes,
**caractérisé en ce que**
le capot de ventilateur (9) est une partie coulée métallique, notamment une partie coulée en aluminium, le capot de ventilateur (9) et/ou la zone du capot de ventilateur (9) en contact avec la plaque (10) étant non usiné.

4. Moteur à convertisseur selon au moins l'une quelconque des revendications précédentes,
**caractérisé en ce que**
le capot de ventilateur (9) est une partie coulée métallique, notamment une partie coulée en aluminium, aucune pâte thermoconductrice n'étant introduite, notamment aucune pâte thermoconductrice n'étant présente entre le module de puissance (11) et le capot de ventilateur (9).

5. Moteur à convertisseur selon au moins l'une quelconque des revendications précédentes,
**caractérisé en ce que**
l'élément élastique (2) presse sur une partie cadre (3), qui presse sur le module de puissance (11) au moyen d'un boulon en matière plastique (20) passant à travers un évidement de la carte de circuit imprimé (5) .

6. Moteur à convertisseur selon au moins l'une quelconque des revendications précédentes,
**caractérisé en ce que**
la carte de circuit imprimé (5) comprend un capteur, qui détecte une couronne dentée (7) reliée de manière immobile en rotation avec le ventilateur (8), notamment détecte la denture de la couronne dentée (7).

7. Moteur à convertisseur selon au moins l'une quelconque des revendications précédentes,
**caractérisé en ce que**
le ventilateur (8) est réalisé sous la forme d'une partie moulée par injection en matière plastique et la couronne dentée (7) est agencée par surmoulage dans le ventilateur (8).

8. Moteur à convertisseur selon au moins l'une quelconque des revendications précédentes,
**caractérisé en ce que**
une partie de guidage de flux (6) pour le guidage d'un flux magnétique est reliée au capot de ventilateur (9), de telle sorte que seul un espace d'air si étroit que la couronne dentée (7) agit en tant que dérivation magnétique est agencé entre le ventilateur (8) et la partie de guidage de flux (6), ainsi qu'entre le capteur et la partie de guidage de flux (6).

9. Moteur à convertisseur selon au moins l'une quelconque des revendications précédentes,
**caractérisé en ce que**
le ventilateur (8) comprend des aubes de ventilateur, la zone axiale recouverte par la couronne dentée (7) étant espacée de la zone axiale recouverte par les aubes de ventilateur.

10. Moteur à convertisseur selon au moins l'une quelconque des revendications précédentes,
**caractérisé en ce que**
la carte de circuit imprimé (5) comprend un évidement, à travers lequel passe une partie filetée (15), qui est reliée à la partie couvercle (1), notamment vissée dans un alésage fileté de la partie couvercle (1),
un contre-écrou assujettissant notamment la partie filetée (15) à la partie couvercle (1), notamment à l'alésage fileté de la partie couvercle (1), et agissant en tant que moyen d'espacement entre la partie couvercle (1) et la carte de circuit imprimé (5).

11. Moteur à convertisseur selon l'une quelconque des revendications 1 à 10,
**caractérisé en ce que**
la carte de circuit imprimé (5) comprend au moins un évidement, à travers lequel passe au moins une partie filetée (15), qui est reliée à la partie couvercle (1), notamment par l'intermédiaire d'un bloc de matière plastique, qui est vissé à la partie couvercle (1),
un écrou (14) servant notamment de moyen d'espacement entre la partie couvercle (1) et la carte de circuit imprimé (5).

12. Moteur à convertisseur selon au moins l'une quelconque des revendications précédentes,
**caractérisé en ce que**
le courant d'air transporté par le ventilateur (8) s'écoule à travers une grille formée sur le capot de ventilateur (9).

13. Moteur à convertisseur selon au moins l'une quelconque des revendications précédentes,
**caractérisé en ce que**
la partie couvercle (1) comprend un évidement, qui peut être fermé par un couvercle de boîtier de raccordement (12) relié à la partie couvercle (1),
une cosse de câble pouvant notamment être enfilée sur chaque partie filetée (15) lorsque le couvercle de boîtier de raccordement (12) est retiré et pouvant être fixée avec un écrou (14), notamment pouvant être pressée contre la carte de circuit imprimé (5),
le couvercle de boîtier de raccordement (12) comprenant notamment un raccord vissé pour câble (13) traversant la paroi du couvercle de boîtier de raccordement (12), notamment pour le passage d'une ligne électrique reliée électriquement à la cosse de câble.

14. Moteur à convertisseur selon au moins l'une quelconque des revendications précédentes,
**caractérisé en ce que**
des composants sont montés sur la carte de circuit imprimé (5), notamment des composants d'une électronique de signalisation du convertisseur, l'électronique de signalisation générant notamment des signaux de commande modulés en largeur d'impulsion pour la commande des commutateurs à semi-conducteurs compris par le module de puissance (11).
